# EUROPEAN PATENT APPLICATION

(11) **EP 4 156 477 A1**
(43) Date of publication of application: **29.03.2023**
(21) Application number: 20941584.3
(22) Date of filing: 04.11.2020
(51) Int. Cl.: H02K 15/14

(54) **ANTI-OVER-POSITIONING MOTOR BEARING DISASSEMBLY-FREE DISASSEMBLY AND ASSEMBLY METHOD**

(30) Priority: 22.06.2020 CN 202010574519
(71) Applicant: CRRC Zhuzhou Electric Co., Ltd, Zhuzhou, Hunan 412000 (CN)
(72) Inventor: HU, Gui, Zhuzhou, Hunan 412000 (CN); TANG, Liming, Zhuzhou, Hunan 412000 (CN); SHEN, Zheng, Zhuzhou, Hunan 412000 (CN); TANG, Zimou, Zhuzhou, Hunan 412000 (CN); YANG, Xiasha, Zhuzhou, Hunan 412000 (CN); CUI, Siliu, Zhuzhou, Hunan 412000 (CN); HUANG, Hongchen, Zhuzhou, Hunan 412000 (CN); HE, Weilin, Zhuzhou, Hunan 412000 (CN); WANG, Guohui, Zhuzhou, Hunan 412000 (CN); WANG, Jibin, Zhuzhou, Hunan 412000 (CN); ZHENG, Guoli, Zhuzhou, Hunan 412000 (CN); CHEN, Bo, Zhuzhou, Hunan 412000 (CN); HUAI, Xiaoji, Zhuzhou, Hunan 412000 (CN); LI, Xiaoman, Zhuzhou, Hunan 412000 (CN); ZHANG, Daolu, Zhuzhou, Hunan 412000 (CN); LI, Hongru, Zhuzhou, Hunan 412000 (CN)
(74) Representative: Sharman, Thomas Alexander
(86) International application number: PCT/CN2020/126393
(87) International publication number: WO 2021/258603

(57) **Abstract**

An anti-over-positioning motor bearing disassembly-free disassembly and assembly method, comprising: pushing a rotating shaft along the axial direction to move the rotating shaft for a preset distance, to drive an inner sealing ring fixed on the distal surface of the rotating shaft to abut against the inner wall of a distal end cover in the axial direction; inserting a plurality of long ejector rods into a plurality of mounting holes reserved in a proximal end cover, and making the tail ends of the long ejector rods abut against a rotor pressing ring sleeved on the middle surface of the rotating shaft; disassembling and replacing a positioning bearing assembly at the distal end of the rotating shaft, and disassembling and replacing a non-positioning bearing assembly at the proximal end of the rotating shaft; and disassembling all the long ejector rods, and installing a positioning bearing seat and a distal end cover in the positioning bearing assembly in place, so that the rotating shaft is reversely reset in the axial direction. The present invention can achieve disassembly-free disassembly and assembly of the motor bearing, improve the disassembly and replacement efficiency, and avoid the situation that the positioning bearing is over-positioned in the disassembly and replacement process.

## Description

The present application claims the priority of Chinese Patent Application No. 202010574519.6, titled "ANTI-OVER-POSITIONING MOTOR BEARING DISASSEMBLY-FREE DISASSEMBLY AND ASSEMBLY METHOD", filed with the Chinese Patent Office on June 22, 2020, which is incorporated herein by reference in its entirety.

### FIELD

The present application relates to the technical field of motors, and in particular to an anti-over-positioning motor bearing disassembly-free dismounting and mounting method.

### BACKGROUND

A bearing is a core component of a motor, which is used to support a rotor to rotate, and ensure the smooth operation of the motor. The bearing is prone to wear and needs to be replaced regularly. At present, if the bearing is repaired and replaced, the motor generally needs to be disassembled, the motor rotor is pulled out from the motor, and then the bearing is pulled out by a specific device. The disassembly of the motor takes a long time, and there is a risk of motor damage caused by human error during the disassembly and reassembly, which lays a quality hidden danger for the safe operation of the motor.

When the conventional motor bearing is repaired and replaced, the motor is disassembled, the rotor is pulled out from the motor, and then the bearing is removed from the rotating shaft by a specific device, and finally a new bearing is remounted on a rotating shaft through tooling, the rotor is put into the motor, and the motor is reassembled. The whole replacement process is complex and time-consuming, and there is a risk of motor damage, which lays a quality hidden danger for the safe operation of the motor.

At present, a two-bearing structure is adopted by most motors, that is, a positioning bearing (such as a deep groove ball bearing or a cylindrical roller bearing with retaining edge, etc., since an inner ring and an outer ring of the bearing cannot be separated, the rotor can be fixed at the original design position, so that the bearing is called positioning bearing) is adopted at one end, and a non-positioning bearing (such as an ordinary cylindrical roller bearing, an inner ring and an outer ring of the bearing can be separated, so that the bearing is called non-positioning bearing or floating end bearing) is adopted at the other end. The characteristic of this kind of motor is that the position of the rotor may not change because the rotor is fixed by the positioning bearing, and the position of the rotor may change accordingly only when the position of the positioning bearing is changed, so the disassembly and assembly of the positioning bearing is difficult.

In the conventional technology, the method for disassembling, replacing and assembling the positioning bearing generally operates through two sets of complex tooling at two ends of the rotor. During the whole disassembly and assembly, the rotor is fixed by the tooling. Since the position of the rotor remains unchanged, an assembly positional relationship between the bearing seat and the end cover must remain unchanged at all when the new positioning bearing is replaced, so as to ensure that the positioning bearing can be mounted at the correct position on the rotating shaft. That is to say, the positioning bearing is over-constrained or over-positioned on the rotating shaft. However, due to the widespread manufacturing deviation of parts, there is a great probability that the assembly position relationship between the bearing seat and the end cover changes, which easily leads to incorrect mounting of the bearing, thereby resulting in product quality problems.

Therefore, how to realize the disassembly-free dismounting and replacement of the motor bearing, improve the efficiency of the dismounting and replacement, avoid over-positioning of the positioning bearing during the dismounting and replacement, and improve product quality, are technical problems faced by those skilled in the art.

### SUMMARY

An object according to the present application is to provide an anti-over-positioning motor bearing disassembly-free dismounting and mounting method, which can realize the disassembly-free dismounting and replacement of the motor bearing, improve the efficiency of the dismounting and replacement, avoid over-positioning of the positioning bearing during the dismounting and replacement, and improve product quality.

In order to solve the above technical problems, an anti-over-positioning motor bearing disassembly-free dismounting and mounting method is provided, which includes:
pushing a rotating shaft axially to move the rotating shaft by a preset distance, to drive an inner sealing ring fixed on a surface of a distal end of the rotating shaft to axially abut against an inner wall of a distal-end end cover;
inserting multiple long ejector rods into multiple mounting holes reserved in a proximal-end end cover, and abutting tail ends of all the long ejector rods against a rotor pressing ring sleeved on a middle surface of the rotating shaft;
dismounting and replacing a positioning bearing assembly at the distal end of the rotating shaft, and dismounting and replacing a non-positioning bearing assembly at a proximal end of the rotating shaft; and
dismounting all the long ejector rods, and mounting a positioning bearing seat in the positioning bearing assembly and the distal-end end cover in place, so that the rotating shaft is reversely reset axially.

Preferably, before pushing a rotating shaft axially to move the rotating shaft by a preset distance, the method further includes:
abutting an output end of a driving component oppositely against an end surface of one end of the rotating shaft.

Preferably, the pushing a rotating shaft axially to move the rotating shaft by a preset distance specifically includes:
pushing, by the output end of the driving component, the rotating shaft axially to move toward an end where the positioning bearing assembly is located by the preset distance.

Preferably, the pushing a rotating shaft axially to move the rotating shaft by a preset distance specifically includes:
pushing, by the output end of the driving component according to a preset feeding speed, the rotating shaft axially to move at a constant speed until the preset distance is reached.

Preferably, the driving an inner sealing ring to axially abut against an inner wall of a distal-end end cover specifically includes:
driving an outer bevel edge of the inner sealing ring to abut against a tail end of an extending plate on the inner wall of the distal-end end cover.

Preferably, before driving an inner sealing ring to axially abut against an inner wall of a distal-end end cover, the method further includes:
processing the outer bevel edge of the inner sealing ring and the tail end of the extending plate of the distal-end end cover, so that a surface of the outer bevel edge of the inner sealing ring tightly abuts against a surface of the tail end of the extending plate of the distal-end end cover.

Preferably, before driving an inner sealing ring to axially abut against an inner wall of a distal-end end cover, the method further includes:
adjusting an axial mounting position of the distal-end end cover on a rotor, so that an axial gap between the outer bevel edge of the inner sealing ring and the tail end of the extending plate of the distal-end end cover is smaller than an axial gap between an outer surface of the inner sealing ring and an inner wall of the positioning bearing seat.

Preferably, the inserting multiple long ejector rods into multiple mounting holes specifically includes:
inserting the long ejector rods axially into the mounting holes which are distributed circumferentially respectively, and threadedly connecting each long ejector rod with the corresponding mounting hole respectively.

Preferably, before inserting multiple long ejector rods into multiple mounting holes, the method further includes:
processing the tail ends of the long ejector rods, so that surface shapes of the tail ends of the long ejector rods are matched with a surface shape of the rotor pressing ring.

The anti-over-positioning motor bearing disassembly-free dismounting and mounting method provided according to the present application mainly includes four steps. In the first step, the rotating shaft is pushed axially to move the rotating shaft by the preset distance. During the axial movement of the rotating shaft, the rotating shaft drives the inner sealing ring fixed on the surface of the distal end of the rotating shaft (an end close to the force application point is the proximal end, and an end away from the force application point is the distal end) to move synchronously, until the preset distance is reached, and the inner sealing ring axially abuts against the inner wall of the distal-end end cover. In this case, since the positioning bearing assembly is sleeved on the rotating shaft, the positioning bearing assembly moves axially synchronously when the rotating shaft moves axially, so that a certain gap is generated between the positioning bearing seat in the positioning bearing assembly and the distal-end end cover, and the value of the gap is the value of the preset distance. In the second step, the long ejector rods are mounted by using the multiple mounting holes reserved in the proximal-end end cover, the long ejector rods are inserted and mounted in the mounting holes respectively, and the tail ends of all the long ejector rods abut against the rotor pressing ring sleeved on the middle surface of the rotating shaft; so far, the two axial ends of the rotating shaft abut against other structural member, the freedom of axial movement of the rotating shaft is limited, and the rotor is fixed axially. In the third step, after the rotating shaft is fixed, the current positioning bearing assembly can be dismounted at the distal end of the rotating shaft, and then a new positioning bearing assembly is remounted at the mounting position on the rotating shaft. Meanwhile, the current non-positioning bearing assembly is dismounted at the proximal end of the rotating shaft, and then a new non-positioning bearing assembly is remounted at the mounting position on the rotating shaft. In the fourth step, all the long ejector rods are removed, in this case, the movement limit of the axial proximal end of the rotating shaft is released, then the positioning bearing seat in the positioning bearing assembly and the distal-end end cover are mounted in place, the gap between the positioning bearing seat and the distal-end end cover disappears after the mount is in place, and the rotating shaft moves reversely axially during the mount until the rotating shaft is reset. In this way, the anti-over-positioning motor bearing disassembly-free dismounting and mounting method provided according to the present application can fix the rotating shaft axially by axially moving the rotating shaft and by using the abutment between the inner sealing ring and the distal-end end cover on the rotating shaft and the abutment between the externally-inserted long ejector rods and the rotor pressing ring, which can realize the disassembly-free dismounting and replacement of the motor bearing, and improve the efficiency of the dismounting and replacement. In addition, before dismounting and replacing the bearing, the certain gap is generated between the positioning bearing seat and the distal-end end cover by the axial movement of the rotating shaft, and the gap can be used for the mounting allowance of the positioning bearing assembly, which avoids the over-positioning of the positioning bearing during the dismounting and replacement, and improves the product quality.

### BRIEF DESCRIPTION OF THE DRAWINGS

For more clearly illustrating embodiments of the present application or the technical solutions in the conventional technology, drawings to be used in the description of the embodiments or the conventional technology will be briefly described hereinafter. Apparently, the drawings in the following description are only some embodiments of the present application. For those skilled in the art, other drawings may be obtained based on the provided drawings without any creative work.
FIG. 1 is a flowchart of a specific embodiment according to the present application;
FIG. 2 is a schematic structural view of a motor bearing according to the specific embodiment of the present application before the motor bearing is dismounted and replaced;
FIG. 3 is a partially schematic structural view of FIG. 2;
FIG. 4 is a schematic structural view of the motor bearing according to the specific embodiment of the present application when the motor bearing is dismounted and replaced;
FIG. 5 is a schematic structural view of the motor bearing according to the specific embodiment of the present application after the motor bearing is dismounted and replaced;
FIG. 6 is a schematic structural view of the motor bearing according to the specific embodiment of the present application after a positioning bearing seat is mounted in place;
FIG. 7 is a schematic structural view of the motor bearing according to another specific embodiment of the present application when the motor bearing is dismounted and replaced;
FIG. 8 is a schematic structural view showing two abutment structures between a long ejector rod and a rotor pressing ring according to another specific embodiment of the present application; and
FIG. 9 is a schematic structural view showing three abutment structures between an inner sealing ring and a distal-end end cover according to another specific embodiment of the present application.

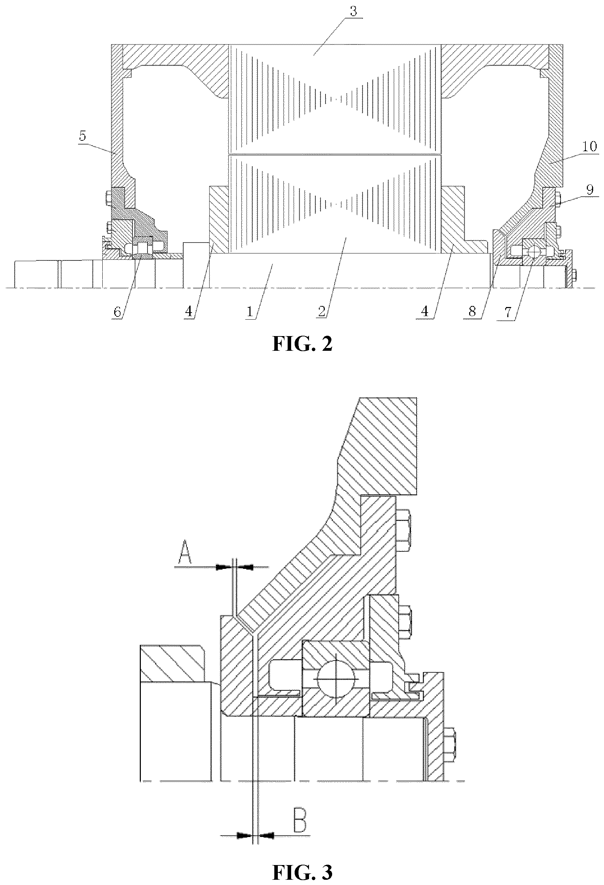

### Reference numerals in FIGS. 2 to 9 are listed as follows:

| | | | |
|---|---|---|---|
| 1, | rotating shaft; | 2, | rotor iron core; |
| 3, | stator; | 4, | rotor pressing ring; |
| 5, | proximal-end end cover; | 6, | non-positioning bearing assembly; |
| 7, | positioning bearing; | 8, | inner sealing ring; |
| 9, | positioning bearing seat; | 10, | distal-end end cover; |
| 11, | long ejector rod. | | |

### DETAILED DESCRIPTION OF THE EMBODIMENTS

Technical solutions in the embodiments of the present application are clearly and completely described hereinafter in conjunction with the drawings in the embodiments of the present application. Apparently, the embodiments described in the following are only some embodiments of the present application, rather than all embodiments. Based on the embodiments in the present application, all of other embodiments, made by the person skilled in the art without any creative efforts, fall into the scope of protection of the present application.

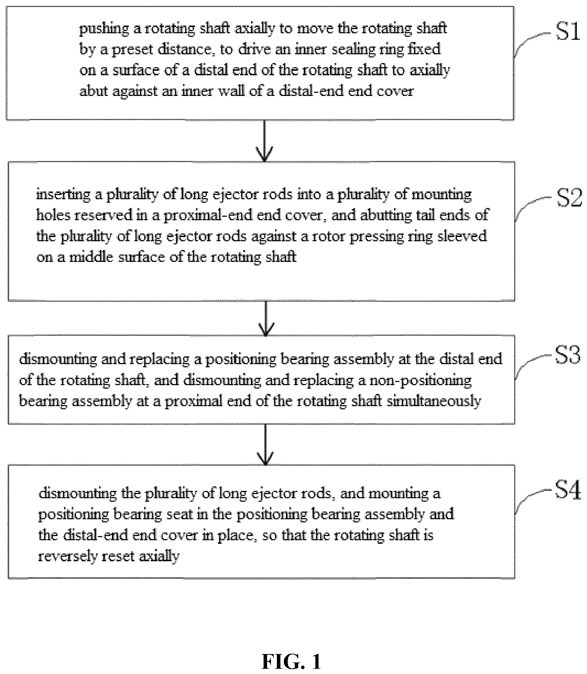

Referring to FIG. 1, FIG. 1 is a flowchart of a specific embodiment according to the present application.

In the specific embodiment according to the present application, an anti-over-positioning motor bearing disassembly-free dismounting and mounting method includes four steps, which are respectively as follows.

S 1, pushing a rotating shaft 1 axially to move the rotating shaft 1 by a preset distance, to drive an inner sealing ring 8 fixed on a surface of a distal end of the rotating shaft 1 to axially abut against an inner wall of a distal-end end cover 10.

S2, inserting multiple long ejector rods 11 into multiple mounting holes reserved in a proximal-end end cover 5, and abutting tail ends of all the long ejector rods 11 against a rotor pressing ring 4 sleeved on a middle surface of the rotating shaft 1.

S3, dismounting and replacing a positioning bearing assembly at the distal end of the rotating shaft 1, and dismounting and replacing a non-positioning bearing assembly 6 at a proximal end of the rotating shaft 1.

S4, dismounting all the long ejector rods 11, and mounting a positioning bearing seat 9 in the positioning bearing assembly and the distal-end end cover 10 in place, so that the rotating shaft 1 is reversely reset axially.

In the first step, the rotating shaft 1 is pushed axially to move the rotating shaft 1 by the preset distance. During the axial movement of the rotating shaft 1, the rotating shaft 1 drives the inner sealing ring 8 fixed on the surface of the distal end of the rotating shaft 1 (an end close to the force application point is the proximal end, an end away from the force application point is the distal end) to move synchronously, until the preset distance is reached, and the inner sealing ring 8 axially abuts against the inner wall of the distal-end end cover 10. In this case, since the positioning bearing assembly is sleeved on the rotating shaft 1, the positioning bearing assembly moves axially synchronously when the rotating shaft 1 moves axially, so that a certain gap (L) is generated between the positioning bearing seat 9 in the positioning bearing assembly and the distal-end end cover 10, and the value of the gap is the value of the preset distance. In addition, a rotor iron core 2 is not aligned with a stator 3, and there is a certain axial distance between the two. As shown in FIG. 2 and FIG. 3, FIG. 2 is a schematic structural view of a motor bearing according to the specific embodiment of the present application before the motor bearing is dismounted and replaced. FIG. 3 is a partially schematic structural view of FIG. 2.

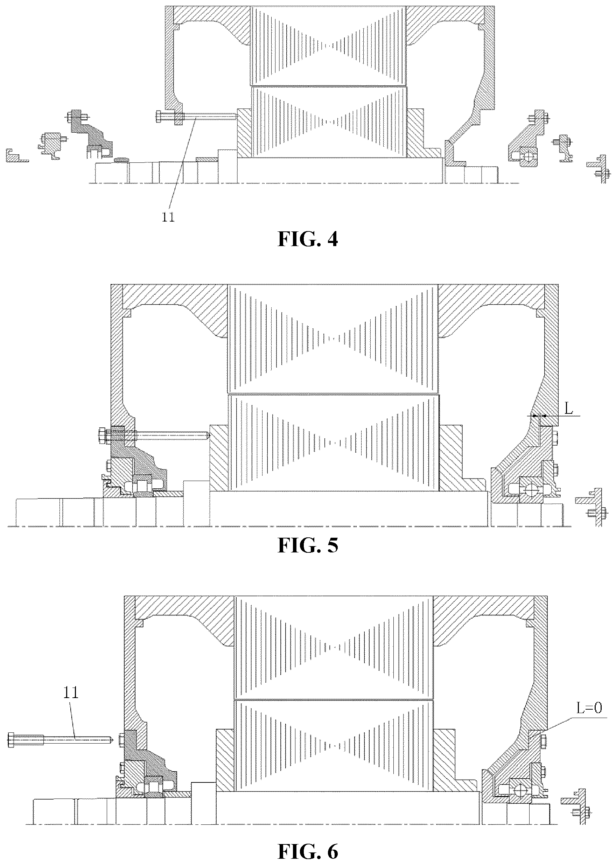

In the second step, the long ejector rods 11 are mounted by the multiple mounting holes reserved in the proximal-end end cover 5, the long ejector rods 11 are inserted and mounted in the mounting holes respectively, and the tail ends of all the long ejector rods 11 abut against the rotor pressing ring 4 sleeved on the middle surface of the rotating shaft 1, and the rotor pressing ring 4 presses against a left side surface and a right side surface of the rotor iron core 2. So far, the two axial ends of the rotating shaft 1 abut against other structural member, the freedom of axial movement of the rotating shaft 1 is limited, and the rotor is fixed axially. Generally, since the mounting holes are uniformly distributed on the proximal-end end cover 5 circumferentially, and the long ejector rod 11 is mounted in each mounting hole, the long ejector rods 11 are distributed circumferentially, so that the freedom of the rotating shaft 1 in all directions is limited. As shown in FIG. 4, FIG. 4 is a schematic structural view of the motor bearing according to the specific embodiment of the present application when the motor bearing is dismounted and replaced.

In the third step, after the rotating shaft 1 is fixed, the current positioning bearing assembly can be dismounted at the distal end of the rotating shaft 1, and then a new positioning bearing assembly is remounted at the mounting position on the rotating shaft 1. Meanwhile, the current non-positioning bearing assembly 6 is dismounted at the proximal end of the rotating shaft 1, and then a new non-positioning bearing assembly 6 is remounted at the mounting position on the rotating shaft 1. The positioning bearing assembly mainly includes a positioning bearing 7 and a positioning bearing seat 9, and the non-positioning bearing assembly 6 mainly includes a non-positioning bearing and a non-positioning bearing seat. Since an inner ring and an outer ring of the positioning bearing 7 cannot be separated during the dismounting and replacement of the positioning bearing, it is necessary to assemble the positioning bearing 7 with the positioning bearing seat 9 into a whole, and then the whole is mounted on the rotating shaft 1. Since an inner ring and an outer ring of the non-positioning bearing 6 can be separated during the dismounting and replacement of the non-positioning bearing 6, the inner ring can be directly sleeved on the rotating shaft 1, the outer ring is assembled with the non-positioning bearing seat into a whole, and then the whole is mounted on an inner ring of the rotating shaft 1. As shown in FIG. 5, FIG. 5 is a schematic structural view of the motor bearing according to the specific embodiment of the present application after the motor bearing is dismounted and replaced.

In the fourth step, all the long ejector rods 11 are removed, in this case, the movement limit of the axial proximal end of the rotating shaft 1 is released, then the positioning bearing seat 9 in the positioning bearing assembly and the distal-end end cover 10 are mounted in place, the gap between the positioning bearing seat 9 and the distal-end end cover 10 disappears after the mount is in place, and the rotating shaft 1 moves reversely axially during the mount until the rotating shaft 1 is reset, so that the rotor iron core 2 is aligned with the stator 3. As shown in FIG. 6, FIG. 6 is a schematic structural view of the motor bearing according to the specific embodiment of the present application after the positioning bearing seat is mounted in place.

In this way, the anti-over-positioning motor bearing disassembly-free dismounting and mounting method provided according to the embodiments can fix the rotating shaft 1 axially by axially moving the rotating shaft 1 and by using the abutment between the inner sealing ring 8 of the rotating shaft 1 and the distal-end end cover 10 and the abutment between the externally-inserted long ejector rods 11 and the rotor pressing ring 4, which can realize the disassembly-free dismounting and replacement of the motor bearing, and improve the efficiency of the dismounting and replacement. In addition, before dismounting and replacing the bearing, the certain gap is generated between the positioning bearing seat 9 and the distal-end end cover 10 by the axial movement of the rotating shaft 1, and the gap can be used for the mounting allowance of the positioning bearing assembly, which avoids the over-positioning of the positioning bearing 7 during the dismounting and replacement, and improves the product quality.

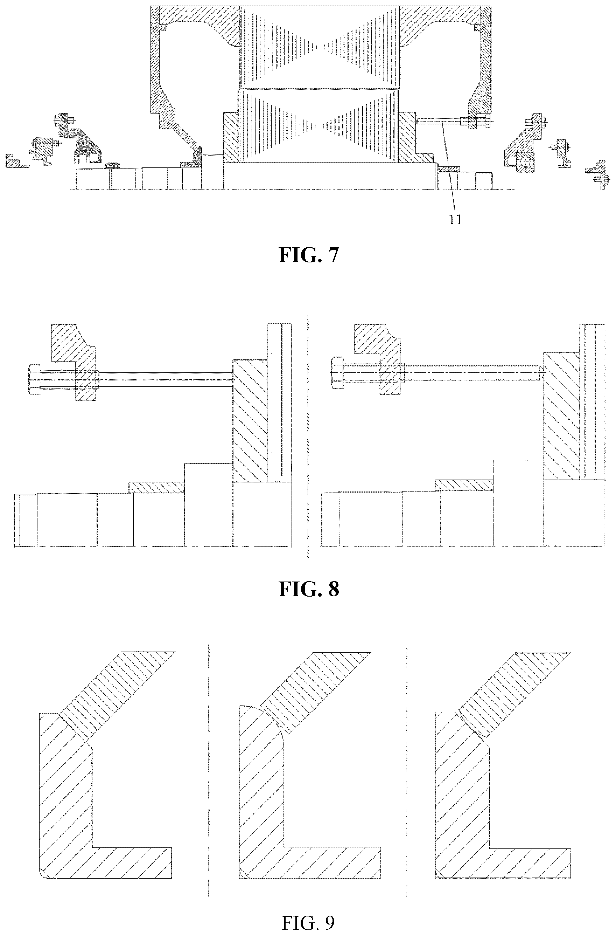

In addition, before pushing the rotating shaft 1 axially to move the rotating shaft 1 by the preset distance, an output end of a driving component oppositely abuts against an end surface of one end of the rotating shaft 1, so that the output end of the driving component can conveniently push the rotating shaft to move axially. Generally, a hydraulic cylinder may be selected as the driving component. The output end of the driving component generally abuts against an end surface (the left end surface shown in the figure, that is, an end surface of the proximal end) of an end where the non-positioning bearing assembly 6 on the rotating shaft 1 is located, so that the rotating shaft 1 can move axially from the left end surface shown in the figure to the right end surface shown in the figure (that is, an end surface of the distal end). Certainly, the output end of the driving component may abut against the end surface of the distal end of the rotating shaft 1, in this case, the rotating shaft moves axially from the right end surface shown in the figure to the left end surface shown in the figure, and the inner sealing ring 8 abuts against an inner wall of the proximal-end end cover 5. As shown in FIG. 7, FIG. 7 is a schematic structural view of the motor bearing according to another specific embodiment of the present application when the motor bearing is dismounted and replaced.

Furthermore, when the rotating shaft 1 is pushed, the output end of the driving component can push the rotating shaft 1 axially to move toward an end where the positioning bearing assembly 7 is located by the preset distance. Generally, the non-positioning bearing assembly 6 and the positioning bearing 7 are respectively arranged at two ends of the rotating shaft 1, the embodiment is described with the non-positioning bearing assembly 6 arranged at the illustrated left end (the proximal end) of the rotating shaft 1 and the positioning bearing 7 arranged at the illustrated right end (the distal end) of the rotating shaft 1 as an example. Specifically, when the driving component outputs power, the driving component can push the rotating shaft 1 according to a preset feeding speed axially to move at a constant speed until the preset distance is reached.

In order to facilitate the abutment between the inner sealing ring 8 and the inner wall of the distal-end end cover 10, in this embodiment, an outer bevel edge of the inner sealing ring 8 can abut against a tail end of an extending plate on the inner wall of the distal-end end cover 10 when the rotating shaft 1 is driven to move axially by the preset distance. Specifically, in order to ensure that the outer bevel edge of the inner sealing ring 8 stably abuts against the tail end of the extending plate on the inner wall of the distal-end end cover 10 circumferentially, and the outer bevel edge of the inner sealing ring 8 and the tail end of the extending plate of the distal-end end cover 10 can be processed before the dismounting and replacement, so that a surface of the outer bevel edge of the inner sealing ring 8 tightly abuts against a surface of the tail end of the extending plate of the distal-end end cover 10. As shown in FIG. 9, FIG. 9 is a schematic structural view showing three abutment structures between the inner sealing ring 8 and the distal-end end cover 10 according to another specific embodiment of the present application. The outer bevel edge of the inner sealing ring 8 may be an inclined surface or an arc surface, and the tail end of the extending plate on the inner wall of the distal-end end cover 10 may also be an inclined surface or an arc surface.

In addition, in order to ensure that the rotating shaft 1 can smoothly drive the inner sealing ring 8 to move synchronously when the rotating shaft 1 moves axially, an axial mounting position of the distal-end end cover 10 on the rotor can be adjusted first before the dismounting and replacement, so that an axial gap between the outer bevel edge of the inner sealing ring 8 and the tail end of the extending plate of the distal-end end cover 10 is smaller than an axial gap between an outer surface of the inner sealing ring 8 and an inner wall of the positioning bearing 7. As shown in FIG. 3, line A is shorter than line B. With such arrangement, when the inner sealing ring moves synchronously with the rotating shaft 1, that is, before the surface of the inner sealing ring 8 is pressed and the inner sealing ring 8 abuts against the positioning bearing seat 9, the inner sealing ring 8 abuts against the tail end of the extending plate of the distal-end end cover 10.

In the step S2, specifically, since the mounting holes are uniformly distributed on the end surface of the proximal-end end cover 5 circumferentially, the long ejector rods 11 are axially inserted into the mounting holes respectively. In addition, in order to ensure the stable mount, each long ejector rod 11 is threadedly connected with the corresponding mounting hole respectively, that is, the long ejector rods 11 can be gradually screwed and mounted in the corresponding mounting hole.

Furthermore, in order to ensure that the tail ends of the long ejector rods 11 stably abut against the surface of the rotor pressing ring 4, the tail ends of the long ejector rods 11 can be processed first before the long ejector rods 11 are inserted, so that surface shapes of the tail ends of the long ejector rods 11 are matched with a surface shape of the rotor pressing ring 4. As shown in FIG. 8, FIG. 8 is a schematic structural view showing two abutment structures between a long ejector rod 11 and a rotor pressing ring 4 according to another specific embodiment of the present application. The tail end of the long ejector rod 11 may be a flat surface, a conical surface or an arc surface.

According to the above description of the disclosed embodiments, those skilled in the art may implement or practice the present application. Many modifications to these embodiments are apparent for those skilled in the art. The general principles defined herein may be applied to other embodiments without departing from the spirit or scope of the present application. Therefore, the present application should not be limited to the embodiments disclosed herein, but has the widest scope in accordance to the principle and the novel features disclosed herein.

## Claims

1. An anti-over-positioning motor bearing disassembly-free dismounting and mounting method, comprising:
pushing a rotating shaft axially to move the rotating shaft by a preset distance, to drive an inner sealing ring fixed on a surface of a distal end of the rotating shaft to axially abut against an inner wall of a distal-end end cover;
inserting a plurality of long ejector rods into a plurality of mounting holes reserved in a proximal-end end cover, and abutting tail ends of the plurality of long ejector rods against a rotor pressing ring sleeved on a middle surface of the rotating shaft;
dismounting and replacing a positioning bearing assembly at the distal end of the rotating shaft, and dismounting and replacing a non-positioning bearing assembly at a proximal end of the rotating shaft simultaneously; and
dismounting the plurality of long ejector rods, and mounting a positioning bearing seat in the positioning bearing assembly and the distal-end end cover in place, so that the rotating shaft is reversely reset axially.

2. The anti-over-positioning motor bearing disassembly-free dismounting and mounting method according to claim 1, wherein before pushing the rotating shaft axially to move the rotating shaft by the preset distance, the method further comprises:
abutting an output end of a driving component oppositely against an end surface of one end of the rotating shaft.

3. The anti-over-positioning motor bearing disassembly-free dismounting and mounting method according to claim 2, wherein that the pushing the rotating shaft axially to move the rotating shaft by the preset distance specifically comprises:
pushing, by the output end of the driving component, the rotating shaft axially to move toward an end where the positioning bearing assembly is located by the preset distance.

4. The anti-over-positioning motor bearing disassembly-free dismounting and mounting method according to claim 3, wherein that the pushing the rotating shaft axially to move the rotating shaft by the preset distance specifically comprises:
pushing, by the output end of the driving component according to a preset feeding speed, the rotating shaft axially to move at a constant speed until the preset distance is reached.

5. The anti-over-positioning motor bearing disassembly-free dismounting and mounting method according to claim 1, wherein that the driving the inner sealing ring to axially abut against an inner wall of a distal-end end cover specifically comprises:
driving an outer bevel edge of the inner sealing ring to abut against a tail end of an extending plate on the inner wall of the distal-end end cover.

6. The anti-over-positioning motor bearing disassembly-free dismounting and mounting method according to claim 5, wherein before driving the inner sealing ring to axially abut against the inner wall of the distal-end end cover, the method further comprises:
processing the outer bevel edge of the inner sealing ring and the tail end of the extending plate of the distal-end end cover, so that a surface of the outer bevel edge of the inner sealing ring tightly abuts against a surface of the tail end of the extending plate of the distal-end end cover.

7. The anti-over-positioning motor bearing disassembly-free dismounting and mounting method according to claim 6, wherein before driving the inner sealing ring to axially abut against the inner wall of the distal-end end cover, the method further comprises:
adjusting an axial mounting position of the distal-end end cover on a rotor, so that an axial gap between the outer bevel edge of the inner sealing ring and the tail end of the extending plate of the distal-end end cover is smaller than an axial gap between an outer surface of the inner sealing ring and an inner wall of the positioning bearing seat.

8. The anti-over-positioning motor bearing disassembly-free dismounting and mounting method according to any one of claims 1 to 7, wherein that the inserting the plurality of long ejector rods into the plurality of mounting holes specifically comprises:
inserting the long ejector rods along axially into the mounting holes which are distributed circumferentially respectively, and threadedly connecting each long ejector rod with the corresponding mounting hole respectively.

9. The anti-over-positioning motor bearing disassembly-free dismounting and mounting method according to claim 8, wherein before inserting the plurality of long ejector rods into the plurality of mounting holes, the method further comprises:
processing the tail ends of the long ejector rods, so that surface shapes of the tail ends of the long ejector rods are matched with a surface shape of the rotor pressing ring.
